# EUROPEAN PATENT SPECIFICATION

(11) **EP 3 636 624 B1**
(45) Date of publication and mention of the grant of the patent: **08.01.2025**
(21) Application number: 19204439.4
(22) Date of filing: 18.09.2013
(51) Int. Cl.: C05G 3/00, B01J 2/20, B01J 2/22, C05D 9/02, C05D 9/00, C05G 5/12

(54) **PROCESS AND APPARATUS FOR PRODUCING A FERTILIZER IN PELLET FORM**
VERFAHREN UND VORRICHTUNG ZUR HERSTELLUNG EINES DÜNGEMITTELS IN PELLETFORM
PROCÉDÉ ET APPAREIL DE PRODUCTION D'UN FERTILISANT EN FORME DE PASTILLES

(30) Priority: 02.10.2012 IT MI20121648
(43) Date of publication of application: 15.04.2020
(62) Divisional of application: 13184892.1
(73) Proprietor: SBS Steel Belt Systems S.r.l., 20146 Milano (IT)
(72) Inventor: CALAMARA', Renato, 20146 MILANO (IT); VIRGILIO, Gianluigi, 20146 MILANO (IT)
(74) Representative: PGA S.p.A.

(56) References cited:
- WO-A1-2012/007331
- DE-A1- 102007 061 408
- US-A- 4 394 150
- US-A- 4 569 859
- US-B1- 6 749 659

## Description

### FIELD OF THE INVENTION

The present invention refers to a process for producing a fertilizer in pellet form to be typically used in the agricultural field for recovering untilled or abandoned farmlands or for fertilizing farmlands, and to the fertilizer in pellet form produced in this way.

### STATE OF THE ART

In the agricultural field, it is known the use of fertilizers adapted to create, reform, conserve and/or increase the fertility of farmlands, in other words adapted to correct the nutritional properties of farmlands to cultivate them with excellent or anyway very good crop yields.

It is possible to find the type of effect on the farmland based on the chemical composition of the fertilizer: for example the farmland is enriched with nutritional elements by fertilizers, the physical properties of the farmland are improved by amendments, while the farmland reactions are corrected by corrective fertilizers.

With reference to the following discussion, the fertilizers in pellet form which comprise suitable batched quantities (by weight and percentage) of fertilizing substances are of particular interest.

The use of fertilizers in pellet form enables a simple deposition and also a correct batching of the fertilizer to be distributed on the farmland so that an operator can, in dependence of the type of treatment, set the most suitable composition and deposit the fertilizer where it is required and with the suitable quantities.

The use of fertilizing pellets further enables to apply with high accuracy the fertilizer in the desired area: so that it is possible to markedly reduce the quantity of fertilizer used in comparison, for example, with a fertilization performed by liquid solutions applied by means or sprinklers.

The pellet production is done by supplying a liquid fertilizing dispersion to a pelletizer adapted to form said pellets on a conveyor belt. Then, the liquid (or semi-liquid) pellets are cooled down so that they can be supplied in a solid state ready for their use.

Examples of processes for manufacturing fertilizers in pellet form are described in the following documents: US 7700012 B2, WO 2012007331 A1, US 20070131381 A1, US 20100288005 A1. Such documents describe processes for manufacturing fertilizers in pellet form by using a fertilizing substance, known as "carrier", in a liquid state which is mixed one or more times with powdery additives. The mixture is then supplied to a pelletizer which deposits a predetermined quantity of the mixed material on a conveyor belt. The pellets in a liquid or semi-solid state are cooled down on the belt so that they can be then handled and packaged.

The above mentioned process makes use of an apparatus having a batch device dedicated to mix the carrier with various additives, and a device separate from the latter for supplying the substance once the dispersion is ready.

In other words, the fertilizer components are introduced in a mixer and then are subjected to a mild intimate mixing process for homogenizing the components; this batch process takes a few tenths of minutes based on the volumes to be prepared. During this step, the pelletizer is inoperative. Once the dispersion is ready, the same is supplied to the pelletizer for its production.

The latter process described and executed by known apparatuses has some disadvantages and limitations. Indeed, the mixing step and the following formation of pellets made of fertilizing substance occur during process steps which are temporally separated and clearly distinct one from the other.

This prolongs the overall manufacturing process with a consequent increase of the production costs.

This process, besides entailing a clear complexity of the mixer which must be heated, provided with mixing elements and a recirculation line, entails at least two serious disadvantages.

On one hand, there are, as said, the above mentioned waiting times for correctly mixing, on the other hand it is not possible to customize the production quantities, in other words all the prepared dispersion has the same composition and enables to produce a quantity determined in advance of the same fertilizer. If the production of fertilizers in different quantities or different compositions were required, more mixers having different volumetries should be used and/or a manufacturing line should be flushed for starting a different production.

Moreover, the applications providing to mill in line the granular additives and the following addition of a carrier in a smaller mixer according to some of the previously mentioned documents, do not fully solve the above mentioned disadvantages because the mills are optimized and programmed based on the substance to be milled, its granulometry and its quantity per time units.

It is clear that any variation of a composition entails to modify the plant (type of mill, distance between the milling surfaces, milling speed, etcetera), and to modify all the process parameters requiring downtime and a new setting.

In other words, the flexibility of these plants is very limited.

It is also known from document US6749659 a fertilizer with the combined use of bentonitic swelling clays with elemental Sulphur to provide a rate of release control formulation where the rate of degradation of the Sulphur matrix can be controlled to provide a measured release of fertilizer materials incorporated in or covered by the formulation. The use of other types of clays that cause swelling and breakdown of the Sulphur at a controlled rate in the Sulphur formulations containing other plant nutrient and soil conditioning materials are also contemplated. Document US4569859 describes a process for the production of water-degradable solid granules or tablets from a homogeneous suspension of bentonite in Sulphur. The process consists of adding from 1% to 15% by weight of bentonite dried to liquid Sulphur from 99% to 85% by weight with continuous and accurate mixing at a temperature between 238 and 318 DEG F, then forming tablets from the mixture, and then quenching by means of an additional compound such as sodium chloride, sodium sulphate, potassium chloride or potassium sulphate, passing the droplets through the quenching solution for sufficient time to coat the tablets, and then removing them from the solution and drying them in the air at a temperature between 150 and 212 DEG F. so that they contain less than 0.1% by weight of water. The process inhibits the swelling of bentonite during storage and gives the tablets the necessary compressive strength to maintain their integrity during storage and transport with minimal dust production during handling. It is also known from document US4394150 a process for the production of a water-degradable clay-sulfur-based compound in tablets. The fertilizer is obtained from a mixture of liquid Sulphur and hygroscopic clay particulates; clay is present in the mixture in an effective quantity to produce granules containing about 7 to 12% by weight of clay.

Documents DE102007061408 and WO2012/007331 show examples of apparatuses for the production of fertilizers in pellet form.

### OBJECT OF THE INVENTION

Therefore it is an object of the present invention to substantially solve at least one of the disadvantages and/or limitations of the preceding approaches. An object is to provide a fertilizer in pellet form which is at the same time economical and practical, by reducing the cost of some components and eventually improving the capabilities of homogenizing the dispersion.

A further subordinate object is to provide a fertilizing composition wherein the percentage by weight of micronutrients can be increased by reducing the number of other components without compromising the synergy among the substances forming a pellet.

The invention is directed to a fertilizer in pellet form according to claim 1 and to a process for producing a fertilizer in pellet form according to claim 2.

The 1 st aspect is a process according to claim 2.

In a 2nd aspect according to the 1st aspect, carrier (F) is supplied to dispenser (6) in a liquid or solid form, particularly in a powdery, granular or pellet form. In a 3rd aspect according to the preceding aspect, carrier (F), when is in a solid form, is liquefied when is mixed in dispenser (6). In a 4th aspect according to anyone of the preceding aspects, the step of mixing the carrier (F) and additive (A) inside dispenser (6) for obtaining a fertilizing dispersion (C) comprises a sub-step of putting in rotation the mixing element (30) for advancing and mixing together the carrier and additive. In a 5th aspect according to anyone of the preceding aspects, a rotation axis of the mixing element (30) being substantially parallel to, and particularly substantially coinciding with the advancing direction. In a 6th aspect according to anyone of the preceding aspects, the mixing element (30) comprises an advancing screw or helix and is movable inside a containment jacket. In a 7th aspect according to anyone of the preceding aspects, the step of mixing the carrier (F) and additive (A) inside the dispenser (6) for obtaining a fertilizing dispersion (C) comprises a sub-step of mixing by at least one extruder. In an 8th aspect according to the preceding aspect, the extruder comprises a single-screw or twin-screw extruder. In a 9th aspect according to anyone of the preceding aspects, the step of mixing the carrier (F) and additive (A) inside the dispenser (6) for obtaining a fertilizing dispersion (C), comprises a sub-step of pushing the carrier (F) and additive (A) by a mixing element (30). In a 10th aspect according to the preceding aspect, the step of pushing the carrier (F) and additive (A), by the mixing element (30), comprises the step of pushing the carrier and additive along and about the advancement direction (10) by following a substantially helical path. In an 11th aspect according to anyone of the preceding aspects, an inlet (6b) of additive dispenser (6) is upstream, along the advancement direction (10), with respect to a carrier inlet (6a). In a 12th aspect according to anyone of the preceding aspects, the additive contacts the carrier following its movement along the advancement direction (10) and mixes with the latter inside the extruder (6). In a 13th aspect according to anyone of aspects 7 - 12, an inlet (6b) to the additive extruder being upstream, along the advancement direction (10), with respect to a carrier inlet (6a), the additive contacting the carrier following its movement along the advancement direction (10) and mixing with the latter inside the extruder (6). In a 14th aspect according to anyone of the preceding aspects, the step of continuously supplying the fertilizing dispersion (C) enables to supply a fertilizing dispersion (C) flow rate greater than 8,000 kg/hr. In a 15th aspect according to anyone of the preceding aspects, the step of continuously supplying the fertilizing dispersion (C) enables to supply a fertilizing dispersion (C) flow rate comprised between 11,000 kg/hr and 15,000 kg/hr. In a 16th aspect according to anyone of the preceding aspects, the step of continuously sending the carrier (F) to the dispenser (6) comprises a sub-step of batching the flow rate of the latter arriving from the source (4) and entering the dispenser (6), adapted to meter the carrier (F) quantity present in the fertilizing dispersion (C). In a 17th aspect according to the preceding aspect, the batching is obtained by controlling an advancement pump (13) by a control unit (9). In an 18th aspect according to the preceding aspect, pump (13) is a geared pump. In a 19th aspect according to anyone of the preceding aspects, the carrier (F) flow rate entering the dispenser (6) is greater than 7,000 kg/hr. In a 20th aspect according to anyone of the preceding aspects, carrier (F) flow rate entering the dispenser (6) is comprised between 9,000 kg/hr and 10,000 kg/hr. In a 21st aspect according to anyone of the preceding aspects, the step of continuously sending the additive (A) to the dispenser (6) comprises a sub-step of batching the quantity of the latter arriving from the additive (5) source and entering the dispenser (6), adapted to meter the quantity of additive of the fertilizing dispersion (C). In a 22nd aspect according to the preceding aspect, the batching is particularly obtained by controlling an additive amount supplied by a gravimetric batcher (25). In a 23rd aspect according to anyone of the preceding aspects, the additive (A) flow rate entering the dispenser (6) is greater than 1,800 kg/hr. In a 24th aspect according to anyone of the preceding aspects, the additive (A) flow rate entering the dispenser (6) is comprised between 2,000 kg/hr and 2,400 kg/hr.

In a 25th aspect according to anyone of the preceding aspect, the fertilizing dispersion (C) exiting the dispenser (6) has a percentage by weight of carrier (F) greater than 70%.

In a 26th aspect according to anyone of the preceding aspects, the fertilizing dispersion (C), exiting the dispenser (6), has a percentage by weight of carrier (F) greater than 80%.

In a 27th aspect according to anyone of the preceding aspects, the fertilizing dispersion (C), exiting the dispenser (6), has a percentage by weight of carrier (F) greater than 85%.

In a 28th aspect according to anyone of the preceding aspects, the fertilizing dispersion (C), exiting the dispenser (6), has a percentage by weight of additive (A) greater than 2%.

In a 29th aspect according to anyone of the preceding aspects, the fertilizing dispersion (C), exiting the dispenser (6), has a percentage by weight of additive (A) greater than 10%.

In a 30th aspect according to anyone of the preceding aspects, the fertilizing dispersion (C), exiting the dispenser (6), has a percentage by weight of additive (A) greater than 15%.

In a 31st aspect according to anyone of the preceding aspects, the carrier (F) comprises at least one substance comprised in the group of the following components: sulphur, urea, ammonium nitrate, paraffin, natural resin, synthetic resin.

In a 32nd aspect according to anyone of the preceding aspects, the additive (A) comprises at least one substance selected from the group of the following substances: clay, urea, sodium sulphates, potassium, calcium, ammonium, sodium phosphates, sodium carbonates, wood ashes, coal, wood shavings, vegetal masses, starches.

In a 33rd aspect according to anyone of the preceding aspects, the additive (A) comprises at least one substance adapted to perform a disgregating mechanical function of the pellet, for example in the presence of water or moisture.

In a 34th aspect according to the preceding aspect, the substance of additive (A), adapted to perform a disgregating mechanical function of the pellet, is at least selected from a group comprising bentonite, clay, wood or derivatives thereof, vegetal masses, starch, stubbles or combinations thereof.

In a 35th aspect according to anyone of the preceding aspects, the additive (A) comprises at least one micronutrient substance.

In a 36th aspect according to the preceding aspect, the micronutrient substance is selected from a group comprising urea, sodium sulphate, potassium, calcium, ammonium, sodium phosphates, sodium carbonates, wood ash or combinations thereof.

In a 37th aspect according to anyone of the preceding aspects, the additive (A) comprises at least one sanitizing substance.

In a 38th aspect according to the preceding aspect, the sanitizing substance is particularly coal.

In a 39th aspect according to anyone of the preceding aspects, the fertilizing dispersion (C), exiting the dispenser (6), has a percentage by weight of additive greater than 2%.

In a 40th aspect according to anyone of the preceding aspects, the fertilizing dispersion (C), exiting the dispenser (6), has a percentage by weight of additive greater than 10%.

In a 41st aspect according to anyone of the preceding aspects, the fertilizing dispersion (C), exiting the dispenser (6), has a percentage by weight of additive greater than 15%.

In a 42nd aspect according to anyone of the preceding aspects, the additive (A) comprises at least one percentage by weight of a substance adapted to perform a disgregating mechanical function of the pellet.

In a 43rd aspect according to anyone of the preceding aspects, the substance of additive (A) is adapted to perform a disgregating mechanical function of the pellet for example in the presence of water or moisture.

In a 44th aspect according to anyone of the preceding aspects, the substance of additive (A), adapted to perform a disgregating mechanical function of the pellet, is comprised between 2 and 15% wt.

In a 45th aspect according to anyone of the preceding aspects, the substance of additive (A), adapted to perform a disgregating mechanical function of the pellet, is equal to or greater than 5% wt.

In a 46th aspect according to anyone of the preceding aspects, the additive (A) comprises at least one percentage by weight of a micronutrient substance.

In a 47th aspect according to the preceding aspect, the micronutrient substance is comprised between 0 and 15% wt.

In a 48th aspect according to the preceding aspect, the micronutrient substance is equal to or greater than 2% wt and less than 12% in wt.

In a 49th aspect according to anyone of the preceding aspects, the process comprises a step of heating the carrier (F), particularly in a liquid form, at least before the step of inserting the same inside the dispenser (6). In a 50th aspect according to the preceding aspect, the heating step is configured to take the carrier (F) to a temperature comprised between 70°C and 200°C. In a 51st aspect according to the preceding aspect, the heating step is configured to take the carrier (F) to a temperature comprised between 80°C and 180°C. In a 52nd aspect according to the preceding aspect, the heating step is configured to take the carrier (F) to a temperature comprised between 90°C and 150°C. In a 53rd aspect according to anyone of the preceding aspects, wherein the support element is configured to take away the pellets from the pelletizer (7). In a 54th aspect according to the preceding aspect, wherein the support element is a conveyor belt (8). In a 55th aspect according to anyone of the preceding aspects, the pellets forming step comprises at least the sub-step of sending the fertilizing dispersion (C) inside the pelletizer in a liquid or semi-liquid state.

In a 56th aspect according to anyone of the preceding aspects, the pellets forming step comprises at least the sub-step of putting in rotation the pelletizer (7).

In a 57th aspect according to anyone of the preceding aspects, the pellets forming step comprises at least the sub-step of supplying a predetermined quantity of fertilizing dispersion (C) on the support element, particularly on the conveyor belt, by a plurality of depositing nozzles. In a 58th aspect according to anyone of the preceding aspects, the pellets cooling step enables to take the latter to a temperature less than 70°C. In a 59th aspect according to anyone of the preceding aspects, the pellets cooling step enables to take the latter to a temperature less than 50°C. In a 60th aspect according to anyone of the preceding aspects, the pellets cooling step enables to take the latter to a temperature comprised between 20°C and 70°C. In a 61st aspect according to anyone of the preceding aspects, the pellets cooling step enables to take the latter to a temperature comprised between 20°C and 50°C. In a 62nd aspect according to anyone of the preceding aspects, the process is configured to enable the continuous production of a number of fertilizing pellets greater than 40,000,000 pellets/hr. In a 63rd aspect according to anyone of the preceding aspects, the process is configured to enable the continuous production of a number of fertilizing pellets greater than 42,000,000 pellets/hr. In a 64th aspect according to anyone of the preceding aspects, the process is configured to enable the continuous production of a number of fertilizing pellets greater than 43,000,000 pellets/hr.

In a 65th aspect it is described an apparatus (1) for producing a fertilizer in pellet form, which is not part of the invention, comprising:
- at least one first supply line (2) configured to enable the passage of at least one carrier (F), said first supply line (2) having at least an inlet (2a) connectable to a source (4) adapted to supply said carrier (F), and at least one outlet (2b) for supplying the same,
- at least one second supply line (3) configured to enable the passage of at least one additive (A) in granular and/or powdery form, said second supply line (3) having at least one inlet (3a) connectable to a source (5) adapted to supply said additive (A) and at least one outlet (3b) for supplying the same,
- at least one dispenser (6) having a first and second inlets (6a; 6b) respectively hydraulically connected to the exits (2b; 3b) of the first and second supply lines (2; 3), said first and second inlets enabling the dispenser to receive at one of its inlets the carrier (F) and additive (A) coming from the corresponding sources (4; 5), said dispenser (6) being configured to move the carrier (F) and additive (A) along one advancement direction (10), said dispenser being further configured to mix the carrier (F) and additive (A) and define a fertilizing dispersion (C) in a liquid or semi-liquid form, said dispenser (6) further comprising at least one exit (6c) adapted to enable the supplying of the fertilizing dispersion (C) exiting the dispenser (6),
   and wherein the apparatus (1) is configured to continuously supply the carrier (F) and additive (A) to the dispenser (6), said dispenser (6) being configured to continuously mix the carrier (F) and additive (A) simultaneously with the movement of them along said advancement direction (10), said dispenser (6) being configured to define the fertilizing dispersion (C) during the movement of the carrier (F) and additive (A) along the movement line for enabling the continuous dispensing of the fertilizing dispersion (C) from said dispenser (6),
- at least one pelletizer (7) arranged at the exit (6c) of dispenser (6), the pelletizer (7) being configured to continuously receive the fertilizing dispersion (C) in a liquid or semi-liquid form from the dispenser (6) and continuously form the pellets.

In a 66th aspect according to the preceding aspect, the dispenser (6) comprises at least one screw extruder configured to move the carrier (F) and additive (A) along the advancement direction (10) and simultaneously enable their mixing. In a 67th aspect according to the aspect 65 o 66, the first supply line (2) is alternatively configured to enable the passage of at least one carrier (F) in a liquid form or carrier (F) in a solid form, particularly in a granular or pellet form. In a 68th aspect according to the preceding aspect, the carrier (F) when is in a solid form, is liquefied during the mixing in the dispenser (6). In a 69th aspect according to anyone of aspects 65 - 68, the apparatus (1) comprises:
- at least one first reservoir (11) adapted to contain the carrier (F), said first reservoir (11) comprising at least one exit (1 1a) hydraulically connected to the inlet (2a) of the first supply line (2),
- at least one second reservoir (12) adapted to contain the additive (A), said second reservoir (12) comprising at least one exit (12a) communicating with the inlet (3a) of the second supply line (3).

In a 70th aspect according to anyone of aspects 67 - 69, the apparatus (1) comprises at least one pump (13) arranged in the first supply line (2) and adapted to supply the liquid carrier (F) to the dispenser (6). In a 71st aspect according to the preceding aspect, the pump (13) is for example a geared pump. In a 72nd aspect according to aspect 70 or 71, the pump (13) is adapted to continuously supply the liquid carrier (F) to the dispenser (6). In a 73rd aspect according to the aspects 70 - 72, the pump (13) is configured to enable to regulate the carrier flow rate entering the dispenser (6). In a 74rd aspect according to anyone of the aspects 65 - 73, the apparatus (1) comprises at least one gravimetric batcher (25) associated to the second reservoir (12) and configured to enable to regulate the quantity of additive (A) exiting said second reservoir (12). In a 75th aspect according to the preceding aspect, the gravimetric batcher (25) is configured to particularly enable to adjust the weight of additive (A) exiting said second reservoir (12).

In a 76th aspect according to anyone of aspects 65 - 75, the fertilizing dispersion (C) has a percentage of carrier (F) greater than 70%.

In a 77th aspect according to anyone of aspects 65 - 76, the fertilizing dispersion (C) has a percentage of carrier (F) greater than 80%.

In a 78th aspect according to anyone of aspects 65 - 77, the fertilizing dispersion (C) has a percentage of carrier (F) greater than 85%.

In a 79th aspect according to anyone of aspects 65 - 78, the fertilizing dispersion (C) has a percentage of additive (A) greater than 2%.

In an 80th aspect according to anyone of aspects 65 - 79, the fertilizing dispersion (C) has a percentage of additive (A) greater than 10%.

In an 81st aspect according to anyone of aspects 65 - 80, the fertilizing dispersion (C) has a percentage of additive (A) greater than 15%.

In an 82nd aspect according to anyone of aspects 62 - 80, the carrier (F) comprises at least one comprised in the group of the following components: sulphur, urea, ammonium nitrate, paraffin, natural resin, synthetic resin.

In an 83rd aspect according to anyone of aspects 65 - 82, the additive (A) comprises at least one selected in the group of the following substances: clay, urea, sodium sulphate, potassium, calcium, ammonium, sodium phosphates, sodium carbonates, wood ash, coal, wood shavings, vegetal masses, starches.

In an 84th aspect according to anyone of aspects 65 - 83, the apparatus (1) comprises a heating device (15) associated to at least said first reservoir (11) and/or supply line (2) and/or dispenser (6), and is configured to heat the carrier (F) present inside the latter. In an 85th aspect according to the preceding aspect, the heating device (15) is adapted to take the temperature of carrier (F) to a temperature comprised between 70°C and 200°C. In an 86th aspect according to aspect 84 or 85, the heating device (15) is adapted to take the temperature of carrier (F) to a temperature comprised between 80°C and 180°C. In an 87th aspect according to the aspect 84 or 85 or 86, the heating device (15) is adapted to take the temperature of carrier (F) to a temperature comprised between 90°C and 150°C. In an 88th aspect according to anyone of aspects 65 - 87, the apparatus (1) comprises at least one conveyor belt (8) adapted to receive the fertilizing dispersion (C) drops formed by the pelletizer (7) and move them along an exit line (16). In an 89th aspect according to anyone of aspects 65 - 88, the apparatus comprises at least one cooling device associated to the conveyor belt (8). In a 90th aspect according to the preceding aspect, the cooling device is configured to lower the temperature of the fertilizing dispersion (C) exiting the pelletizer (6). In a 91st aspect according to aspect 89 or 90, the cooling device is configured to take the pellets moving on the conveyor belt to a temperature less than 70°C. In a 92st aspect according to aspect 89 or 90 or 91, the cooling device is configured to take the pellets moving on the conveyor belt to a temperature less than 50°C. In a 93rd aspect according to anyone of aspects 90 - 92, the cooling device is configured to take the pellets moving on the conveyor belt to a temperature comprised between 20°C and 70°C. In a 94th aspect according to anyone of aspects 92 - 93, the cooling device is configured to take the pellets moving on the conveyor belt to a temperature comprised between 20°C and 50°C. In a 95th aspect according to anyone of aspects 65 -94, the apparatus comprises a bypass line (17) hydraulically connected to the first supply line (2), and configured to supply the carrier (F) to the pelletizer (7) by bypassing the dispenser (6). In a 96th aspect according to the preceding aspect, the apparatus (1) comprises at least one shut-off element (18) arranged in the first supply line (2) upstream the exit (2b) of the latter. In a 97th aspect according to the preceding aspect, the shut-off element is in fluid communication with both the first supply line and bypass line, said shut-off element (18) being configured to define a normal operation condition, wherein the latter enables the passage of the carrier through the overall supply line to the dispenser (6), while prevents the passage of the carrier through the bypass line, said shut-off element (18) being further configured to define a bypass condition, wherein the latter prevents the passage of the carrier (F) by preventing the latter to reach the dispenser, while enables the passage of the fluid through said bypass line; said shut-off element (18), in the bypass condition, preventing the dispenser from receiving the liquid carrier. In a 98th aspect according to aspect 96 or 97, the shut-off element comprises a three-way valve. In a 99th aspect according to anyone of aspects 65 - 98, the apparatus (1) comprises at least one volumetric meter (19) associated to the first supply line (2), and configured to control the flow rate of the liquid carrier flowing through said first supply line (2). In a 100th aspect according to anyone of aspects 65 - 99, the apparatus comprises an aspirator (20) substantially located at the exit (6c) of the dispenser (6). In a 101st aspect according to the preceding aspect, the aspirator (20) is configured to enable at least the removal of gasses and/or vapors generated in said dispenser (6). In a 102nd aspect according to aspect 100 or 101, the aspirator (20) comprises:
- at least one collecting hood (21) located at least at the pelletizer (7) and adapted to contain the gasses and/or vapors generated when the fertilizing dispersion is supplied,
- at least one discharge line (22) in fluid communication with the collecting hood (21) and adapted to enable to withdraw and then eject the gasses and/or vapors collected by the latter,
- at least one ejection device (23) operative on the discharge line (22) and configured to take the gasses and/or vapors from the collecting hood (21) into the discharge line (22) to enable their ejection.

In a 103rd aspect according to anyone of aspects 65 - 102, the apparatus (1) comprises at least one control unit (9) connected and operative on at least one of the following components of the apparatus:
- the pump (13), said control unit (9) being operative on the pump (13) and configured to manage the flow rate of the carrier to be supplied to the dispenser (6),
- the gravimetric batcher (25), said control unit (9) being operative on the batcher (25) and configured to manage the quantity, particularly the weight of the additive to be supplied to the dispenser (6),
- the dispenser (6), said control unit (9) being operative on the dispenser (6) and configured to manage the flow rate of the fertilizing dispersion to be supplied to the pelletizer (7).

In a 104th aspect according to the preceding aspect, the control unit (9) is connected to the pelletizer (7) and conveyor belt (8). In a 105th aspect according to the preceding aspect, the control unit is configured to regulate the supply of the fertilizing dispersion (C) by the management of the dispenser (6). In a 106th aspect according to aspect 104 or 105, the control unit (9) is further configured to manage:
- the speed of formation of the pellets from the pelletizer, and
- the speed of advancement of the pellets on the conveyor belt (8).

In a 107th aspect according to anyone of aspects 104 - 106, the control unit (9) is configured to manage the formation and discharge speeds respectively of the pelletizer (7) and conveyor belt (8), based on the flow rate of the fertilizing dispersion exiting the dispenser (6). In a 108th aspect according to anyone of aspects 103 - 107, the control unit (9) is connected to the volumetric meter (19) and is configured to monitor the flow rate of carrier flowing from the first supply line (2).

In a 109th aspect it is provided a process for producing a fertilizer in pellet form, comprising the following steps:
- providing at least one carrier (F) comprising at least one comprised in the group of the following components: sulphur, urea, ammonium nitrate, paraffin, natural resin, synthetic resin;
- providing at least one additive (A) in a granular or powdery form;
- homogeneously mixing the carrier (F) and additive (A) for obtaining a fertilizing dispersion (C) in a liquid or semi-liquid form, said liquid carrier being present inside the dispersion with a percentage by weight not less than 70%;
- sending said fertilizing dispersion (C) in a liquid or semi-liquid form to the pelletizer (7) configured to enable to form pellets of fertilizer (C);
- forming the pellets by the pelletizer (7) by supplying drops of the fertilizing dispersion on at least one conveyor belt (8);
- cooling said pellets passing on said conveyor belt (8) in order to enable a solidification, at least partial, of the latter, the additive (A) comprising at least one substance adapted to have a disgregating mechanical function of the pellet, for example in the presence of water or moisture, said substance being adapted to have a disgregating mechanical function of the pellet being selected in the group of vegetal fibers such as wood, wood-based materials, vegetal masses, starches, stubbles and/or combinations thereof, said substance being adapted to have a disgregating mechanical function of the pellet being present in percentage greater than 2% by weight.

In a 110th aspect according to the preceding aspect, the percentage by weight of the carrier (F) is greater than 80%, particularly greater than 85%.

In a 111th aspect according to aspect 109 or 110, the percentage by weight of additive (A) is greater than 10%, particularly greater than 15%.

In a 112th aspect according to anyone of the 109th-111th aspects, the carrier (F) is sulphur or urea.

In a 113th aspect according to anyone of aspects 109 - 112, the carrier (F) is substantially insoluble in water.

In a 114th aspect according to anyone of aspects 109 -113, the substance adapted to have a disgregating mechanical function of pellets, absorbs water and/or moisture by increasing the volume for at least partially mechanically disgregating the pellets.

In a 115th aspect according to anyone of aspects 109 - 114, the additive (A) further comprises at least one micronutrient substance, said micronutrient substance being particularly selected in the group comprising: urea, sodium sulphates, potassium, calcium, ammonium, sodium phosphates, sodium carbonates, wood ash, or combinations thereof.

In a 116th aspect according to the preceding aspect, the micronutrient substance has a percentage by weight less than 15%, more particularly less than 12% by weight.

In a 117th aspect according to the preceding aspect, the micronutrient substance has a percentage by weight greater than 5%, more particularly greater than 8% by weight.

In a 118th aspect according to anyone of aspects 108 - 117, the additive (A) has a percentage by weight less than 20% and particularly less than 16% by weight.

In a 119th aspect according to anyone of aspects 109 - 118, the additive (A) comprises at least one sanitizing substance, said sanitizing substance being particularly coal.

In a 120th aspect according to anyone of aspects 109 - 119, the substance adapted to have a disgregating mechanical function of the pellet is present in percentage by weight less than 10% and particularly less than 7% by weight.

In a 121st aspect according to anyone of aspects 109 - 120, the substance adapted to have a disgregating mechanical function of the pellet is present in percentage by weight greater than 10%.

In a 122nd aspect according to anyone of aspects 109 - 121, the weight of at least 90% of the fertilizer pellets is less than 100 gr, particularly less than 80 gr, still more particularly less than 50 gr.

In a 123rd aspect according to anyone of aspects 109 - 122, the specific weight of the substance adapted to have a disgregating mechanical function of the pellet is less than 1.7 kg/dm³, particularly less than 1.5 kg/dm³.

In a 124th aspect according to anyone of aspects 109 - 123, the specific weight of carrier (F) is greater than 1.3 kg/dm³, particularly greater than 1.9 kg/dm³.

In a 125th aspect according to anyone of aspects 109 - 124, the substance adapted to have a disgregating mechanical function of the pellet is dispersed in the pellet in a particulate form wherein the particles have a granulometry greater than 50 microns and less than 150 microns, particularly comprised between 80 and 120 microns.

In a 126th aspect according to anyone of aspects 109 - 125, the process further comprises the steps of:
- providing at least one first supply line (2) adapted to enable the passage of the carrier (F),
- providing at least one second supply line (3) adapted to enable the passage of additive (A) in a granular or powdery form,
- providing at least one dispenser (6) in communication with at least said first and second supply lines (2; 3),
- continuously sending to the dispenser (6), through the first supply line (2), the carrier (F) arriving from a corresponding source (4),
- continuously sending to the dispenser (6), through the second supply line (3), the additive (A) arriving from a corresponding source (5),
- moving, inside the dispenser (6), the carrier (F) and additive (A) along an advancement direction (10) of the process,
- mixing, inside the dispenser (6), the carrier (F) and additive (A) for obtaining a liquid or semi-liquid fertilizing dispersion (C), the mixing step being continuously performed and simultaneously with the step of moving the carrier (F) and additive (A) along the advancement direction (10) so that to enable to continuously supply the fertilizing dispersion (C) on the pelletizer (7).

In a 127th aspect according to anyone of aspects 109 - 126, the mixing step is performed inside a dispenser (6) and comprises a sub-step of continuously advancing the carrier (F) and additive (A) by pushing them along the advancement direction (10) by at least one mixing element (30), said mixing element (30) mixing the carrier and additive simultaneously with the continuous advancing step.

In a 128th aspect according to the preceding aspect, the step of mixing the carrier (F) and additive (A) inside the dispenser (6) for obtaining a fertilizing dispersion (C) comprises a sub-step of putting in rotation the mixing element (30) for advancing and mixing together the carrier and additive, a rotation axis of the mixing element (30) being substantially parallel to, and particularly substantially coinciding with the advancing direction.

In a 129th aspect according to aspect 127 or 128, the mixing element (30) comprises an advancing screw or helix and is movable inside a containment jacket.

In a 130th aspect according to anyone of aspects 109 - 129, the mixing step comprises a sub-step of mixing by at least an extruder, for example a single-screw or twin-screw extruder.

In a 131st aspect according to anyone of aspects 109 - 130, the mixing step comprises a sub-step of pushing the carrier (F) and additive (A), by a mixing element (30), along and around an advancement direction (10) by following a substantially helical path. In a 132nd aspect according to aspect 130 or 131, an inlet (6b) of the extruder of the additive is upstream, along the advancement direction (10), with respect to an inlet (6a) of the carrier, the additive contacting the carrier upon its displacement along the advancement direction (10), and mixing with the latter inside the extruder (6). In a 133rd aspect according to anyone of aspects 109 - 132, the step of continuously supplying the fertilizing dispersion (C) enables to supply a flow rate of the fertilizing dispersion (C) greater than 8,000 kg/hr, particularly comprised between 11,000 kg/hr and 15,000 kg/hr. In a 134th aspect according to anyone of aspects 109 - 133, a step of continuously supplying the carrier (F) to the dispenser (6) comprises a sub-step of batching the flow rate of the latter arriving from the source (4) and entering the dispenser (6) adapted to regulate the quantity of fertilizing solution (F) present in the fertilizing dispersion (C), the batching being particularly obtained by controlling, through a control unit (9), an advancement pump (13), for example, a geared pump. In a 135th aspect according to anyone of aspects 109 - 134, a step of continuously supplying the additive (A) to a dispenser (6) comprises a sub-step of batching the quantity of the latter arriving from the additive source (5) and entering the dispenser (6) adapted to regulate the quantity of additive in the fertilizing dispersion (C), the batching being particularly obtained by controlling a quantity of additive supplied by a gravimetric batcher (25). In a 136th aspect according to anyone of aspects 109 - 135, the process comprises a step of heating the liquid carrier (F) configured to take the liquid carrier (F) to a temperature comprised between 70°C and 200°C, particularly comprised between 80°C and 180°C, still more particularly comprised between 90°C and 150°C. In a 137th aspect according to anyone of aspects 109 - 139, the pellets forming step comprises at the least the sub-steps of sending the fertilizing dispersion (C) into the pelletizer in a liquid or semi-liquid state, putting in rotation the pelletizer (7) and supplying a predetermined quantity of the fertilizing dispersion (C) on the conveyor belt through a plurality of depositing nozzles. In a 138th aspect according to anyone of aspects 109 - 137, a pellets cooling step enables to take the pellets to a temperature less than 70°C, for example less than 50°C, particularly comprised between 20°C and 70°C, still more particularly comprised between 20°C and 50°C. In a 139th aspect according to anyone of aspects 109 - 138, the process is configured to enable the continuous production of a number of fertilizing pellets greater than 40,000,000 pellets/hr, particularly greater than 42,000,000 pellets/hr, still more particularly greater than 43,000,000 pellets/hr.

In a 140th aspect it is provided a fertilizer in pellet form, each pellet comprising:
- a carrier (F) comprising sulphur being present in the dispersion in percentage by weight not less than 70%;
- at least one additive (A) homogeneously dispersed in the carrier (F), the additive (A) comprising at least one substance adapted to have a disgregating mechanical function of the pellet, for example in the presence of water or moisture, said substance adapted to have a disgregating mechanical function of the pellet being selected in the group of vegetal fibers such as wood, wood-based materials, vegetal masses, starch, stubbles and/or combinations thereof, said substance adapted to have a disgregating mechanical function of the pellet being present in percentage greater than 2% by weight and wherein the substance having a disintegrating mechanical function of the pellet is dispersed in the pellet in a particulate form wherein the particulate have a granulometry greater than 50 microns and less than 150 microns.

In a 141st aspect according to the preceding aspect, the percentage by weight of the carrier (F) is greater than 80%, particularly greater than 85%.

In a 142nd aspect according to aspect 140 or 141, the percentage by weight of the additive (A) is greater than 10%, particularly greater than 15%.

In a 143rd aspect according to anyone of aspects 140 - 142, the carrier (F) is sulphur.

In a 144th aspect according to anyone of aspects 140 - 143, the carrier (F) is substantially insoluble in water.

In a 145th aspect according to anyone of aspects 140 - 144, the substance adapted to have a disgregating mechanical function of the pellet absorbs water and/or moisture by increasing the volume for at least partially mechanically disgregating the pellet.

In a 146th aspect according to anyone of aspects 140 - 145, the additive (A) further comprises at least one micronutrient substance, said micronutrient substance being particularly selected in the group comprising urea, sodium sulphates, potassium, calcium, ammonium, sodium phosphates, sodium carbonates, wood ash or combinations thereof.

In a 147th aspect according to the preceding aspect, the micronutrient substance is comprised in percentage by weight less than 15%, more particularly less than 12% by weight.

In a 148th aspect according to the preceding aspect, the micronutrient substance is comprised in percentage by weight greater than 5%, more particularly greater than 8% by weight.

### BRIEF DESCRIPTION OF THE DRAWINGS

Some embodiments and aspects of the invention will be described in the following with reference to the attached drawings supplied only in an illustratively and therefore non-limiting way, wherein:
- Figure 1 schematically shows in a non-limiting way an apparatus for producing a fertilizer in pellet form (not part of the present invention)
- Figure 2 schematically shows a further embodiment of the apparatus for producing the fertilizer in pellet form;
- Figure 3 schematically shows in a non-limiting way a detail of the apparatus for producing a fertilizer in pellet form according to the embodiments illustrated in Figures 1 and 2.

### DETAILED DESCRIPTION

### Apparatus for producing a fertilizer in pellet form

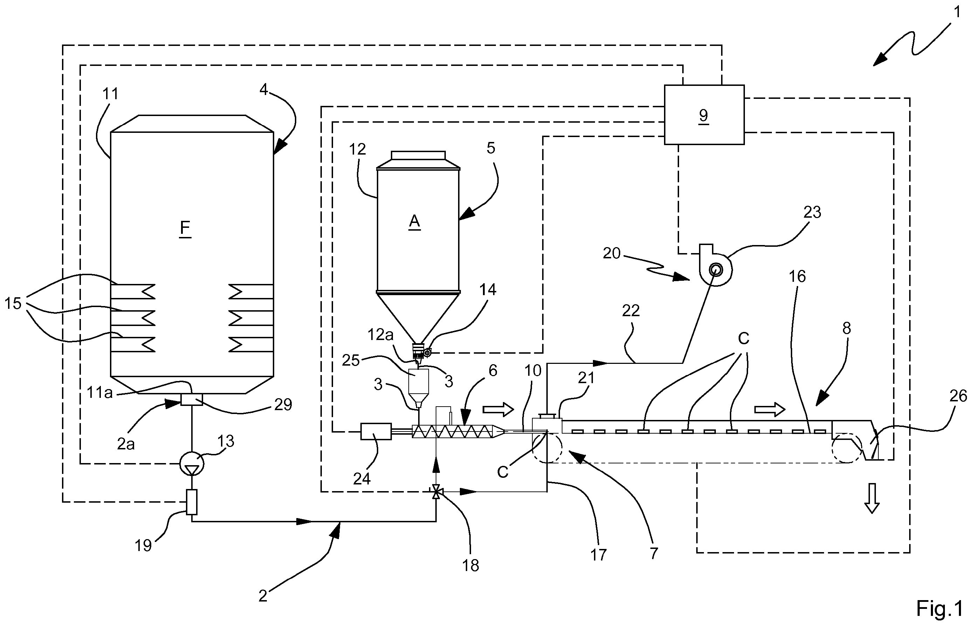

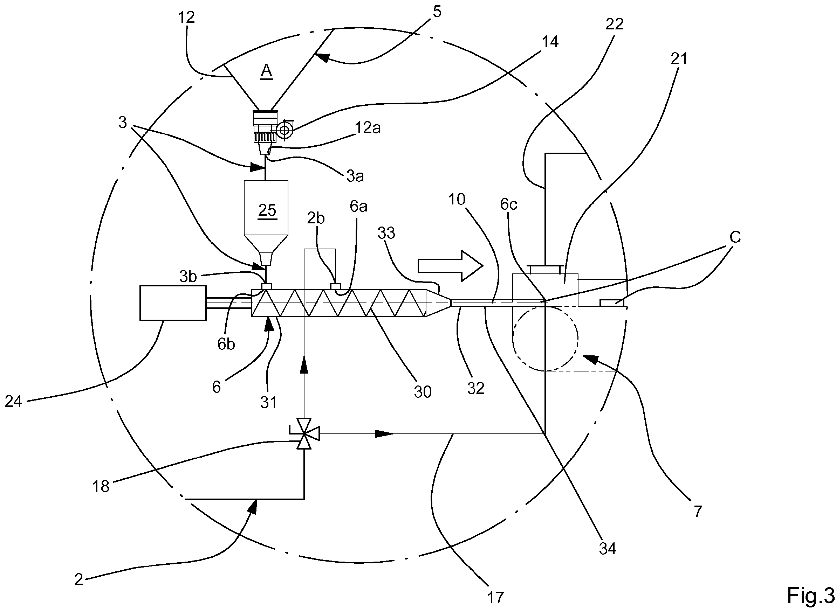

1 generally indicates an apparatus for producing a fertilizer in pellet form useful in the agricultural, zootechnical and gardening fields, for treating farmlands. Apparatus 1 comprises a source 4 of a carrier F which is adapted to enable to form fertilizing pellets for creating, recovering, conserving and/or increasing the fertility of a farmland, in other words to correct the nutritional properties of the farmland for cultivating it with excellent crop yields. Generally, in the following description, it is made reference to a carrier in liquid form at the time it is supplied by a dispenser, however it is observed that the carrier F can be alternatively fed to the dispenser, as described in the following, in a solid form (for example as powder, granules or pellets) and gradually liquefied as the mixing step advances inside the dispenser. Particularly, during the process steps, carrier F is kept at a temperature such to be in a liquid form (generally, the carrier is in a solid form at the environment temperature, that is 25°C) and comprises at least one substance selected in the group of the following substances: sulphur, urea, ammonium nitrate, paraffin, natural resin, synthetic resin or a mixture thereof. Generally, urea-based and sulphur-based carriers (in other words substantially or prevalently consisting of urea and sulphur) are those mainly used for their chemical properties and their low cost. To this end, it is noted that generally the substances forming the carrier are insoluble in water/moisture. Therefore, the fertilizing compositions must contain an additive such to absorb water/moisture and increase the volume in order to disgregate (by a mechanical action) at least partially the used fertilizing pellet. In the attached figures, it is illustrated a preferred arrangement of the manufacturing plant wherein a source 4 comprises a first reservoir 11 adapted to contain the carrier F in a liquid form. From a structural point of view, first reservoir 11 comprises, in a non limiting way, a silos having a substantially cylindrical shape and extending, in an operative condition of the same, along a vertical direction. Indeed, first reservoir 11 comprises a container having a bottom wall having a circular profile, a side wall having a cylindrical shape perimetrally connected to the bottom wall, and an upper wall located at the top of the side wall. In a preferred embodiment, first reservoir 11 is provided with a heating device 15 configured to heat carrier F for keeping it at a temperature comprised between 70°C and 200°C, particularly comprised between 80°C and 180°C, still more particularly comprised between 90°C and 150°C. Indeed, the heating device 15 is configured to keep carrier F at a liquid form and enable to manage and moving it outside reservoir 11. Figure 1 represents, in a non-limiting way, an arrangement in which the heating device 15 is associated, in a non-limiting way, to the side wall of reservoir 11. Alternatively, device 15 can be associated to the bottom wall and/or upper wall of reservoir 11 (such configuration is non illustrated in the attached figures). Naturally, carrier source 4 could consist in any other element adapted to supply a predetermined quantity of carrier in a liquid form. As it is shown for example in Figure 1, first reservoir 11 comprises at least one exit 11a advantageously located on the bottom wall of the latter, and which is configured to enable the carrier F to exit the reservoir 11. Exit 11a is hydraulically connected to a first supply line 2: the latter being adapted to enable the carrier F to be withdrawn from the first reservoir 11 and to discharge the same inside a dispenser 6 (dispenser 6 will be better described in the following). More particularly, supply line 2 extends from an inlet 2a at which there is a connector 29 adapted to enable the hydraulic coupling of the first supply line 2 to the first reservoir 11, particularly the exit 11a of the first reservoir 11 to the inlet 2a of the first supply line 2. As it is shown for example in Figure 1, the first supply line 2 is provided with at least one pump 13, for example a geared pump, configured to enable to withdraw the carrier F from the first reservoir 11 and send the same to the dispenser 6. In the attached figures, it is shown a preferred condition of apparatus 1 comprising, in a non-limiting way, a volumetric meter 19 operative on the first supply line 2: the meter 19 enabling to monitor the flow rate (quantity) of carrier F exiting from the first reservoir 11 and flowing through the first supply line 2. As it is shown in the attached figures, the volumetric meter 19 is positioned, in a non-limiting way, downstream the pump 13; however there is the possibility of positioning (or omitting) the volumetric meter 19 upstream the pump 13. As it is clearly shown by means of the diagram of Figure 3, the first supply line 2 further comprises an exit 2b hydraulically connected to the dispenser 6 and which enables to introduce into the latter the liquid carrier F coming from the first reservoir 11. Before describing the dispenser 6, it is useful to note that the apparatus 1 further comprises at least one further source 5 of at least one additive A in a granular or powdery form.

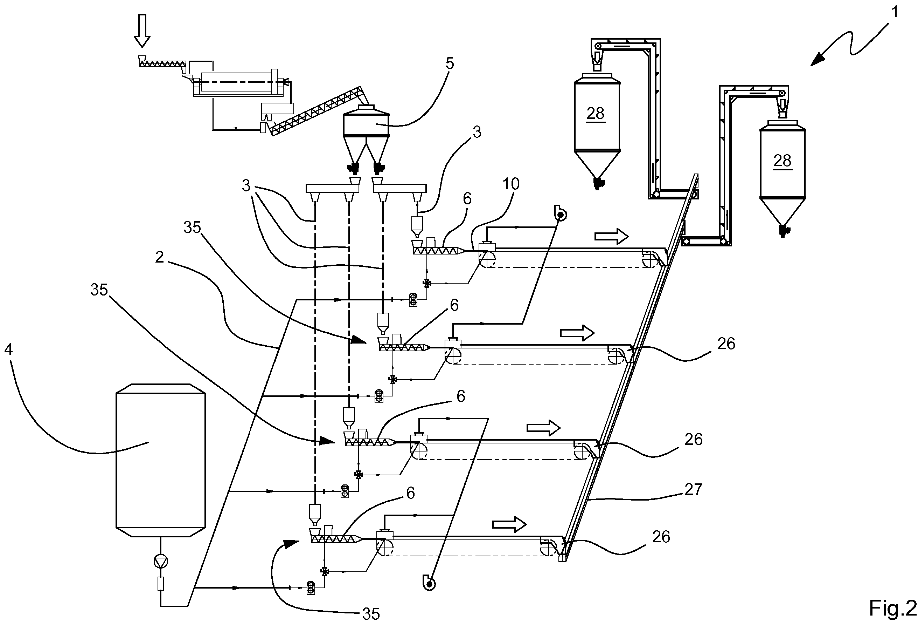

The granular or powdery additive A is adapted to be supplied to the dispenser 6 in order to be intimately mixed with the carrier F: additive A is designed to provide suitable chemical-physical properties to the pellets, such as fertilizing, amending properties, etcetera. Specifically, additive A comprises at least one compound selected in the group of the following compounds: clay, urea, sodium sulphates, potassium, calcium, ammonium, sodium phosphates, sodium carbonates, wood ash, coal, wood shavings, vegetal masses, starches, and obviously mixtures thereof. In the following of the description, such additive will be further discussed and described specifically about its functions. In the attached figures, a preferred configuration wherein source 5 comprises a second reservoir 12 adapted to contain the additive A is represented. Reservoir 12 comprises, in a non-limiting way, a silos which, as for the reservoir 11, comprises a bottom wall, a side wall, and an upper wall. The bottom wall advantageously is in the shape of a funnel enabling to drive the additive A to at least one exit 12a of reservoir 12. Advantageously, apparatus 1 comprises valves 14 associated to reservoir 12 and particularly arranged at the exit 12a of the latter. Valves 14 are configured to enable to supply additive A exiting said second reservoir 12. As it is shown particularly in Figure 3, apparatus 1 comprises, in a non-limiting way, a dispenser 25 associated to the supply line 3, particularly positioned between the inlet and exit 3a, 3b of the same supply line 3; dispenser 25 is formed for example by a hopper adapted to receive additive A exiting the reservoir 12 and supply into the dispenser 6. Indeed, dispenser 25 enables to control with high accuracy the quantity of additive A to be mixed with carrier F and consequently facilitates the control of the fertilizing pellets composition. For example, a gravimetric-type dispenser can be used. The exit 12a of reservoir 12 is connected (in fluid communication with) to a second supply line 3: the latter being adapted to enable to withdraw the additive A from reservoir 12 and introduce the same in the dispenser 6 (dispenser 6 will be better described in the following). More specifically, supply line 3 extends from an inlet 3a, in communication with the exit 12a of reservoir 12, to an exit 3b communicating with dispenser 6. As previously mentioned, apparatus 1 comprises a dispenser 6 connected to the first and second supply lines 2, 3 and configured to receive carrier F and additive A. Particularly, dispenser 6 is configured to move carrier F and additive A along an advancement direction 10 and simultaneously enable to mix them. The mixture of carrier F and additive A enables to form a fertilizing dispersion C which will then constitute the fertilizing pellets. More particularly, apparatus 1 is configured to continuously send the carrier F and additive A to the dispenser 6 which continuously mixes and moves the liquid carrier F and additive A: dispenser 6 is configured to form the fertilizing dispersion C during the movement of the carrier F and additive A along the movement direction 10 for enabling to continuously supply the fertilizing dispersion C from the dispenser 6. Dispenser 6 comprises a mixing element 30 configured to mix the carrier F and additive A simultaneously with the continuous advancement step. Particularly, mixing element 30 comprises, in a non-limiting way, an extruder 15 having a prevailing extension direction and extending between a first and second ends 31, 32. The movement of carrier F and additive A occurs along the advancement line 10 which has a direction starting from the first end 31 pointing to the second end 32 of the extruder 15. As it is visible from the detail of Figure 3, the dispenser 6 comprises a first and second inlets 6a, 6b fluidically communicating respectively with the exits 2b, 3b of the first and second supply lines 2, 3. Indeed, inlets 6a, 6b enable to introduce the carrier F and additive A in the extruder 15 through the supply lines 2, 3. As previously mentioned, dispenser 6, besides moving the carrier F and additive A, is configured to enable to mix them. For this reason, the first and second inlets 6a, 6b are advantageously located at a first half of the extruder 15 receiving said first end 31. First inlet 6a is positioned between the first and second ends 31, 32 of the latter, particularly at the center line of the extruder 15. Second inlet 6b is advantageously positioned at the first end 31, advantageously downstream the first inlet. Independently of the above mentioned absolute positioning, in relative terms, it is observed that the additive A inlet is positioned upstream the inlet of the liquid carrier F. Introducing the additive A in a granular or powdery form upstream the introduction of the liquid carrier F enables to substantially define a solid plug formed by the granular or powdery additive which is pushed by the dispenser to the exit of the latter. The introduction of the liquid carrier from the first inlet enables the latter to be mixed with the solid plug advancing from an exit 6c of the dispenser 6 to form said fertilizing dispersion C. Indeed, introducing the carrier F downstream the additive enables the liquid carrier to advance along the advancement direction 10, particularly with additive A. Indeed, the introduction of carrier F and additive A in the first half of the extruder 15 enables the latter to perform a correct mixing during the movement of the carrier and additive in the direction of the second end 32 for forming the fertilizing dispersion C. As it was previously mentioned and specifically shown by Figure 3, dispenser 6 further comprises an exit 6c located at the second end 32: the exit 6c being adapted to enable to eject the fertilizing dispersion C outside the extruder 15. More particularly, possibly the exit area of the extruder has a throttling 33 adapted to receive the fertilizing dispersion and increase the pressure before its ejection. A nozzle 34 communicating with the throttling 33 has a passage cross-section smaller than the passage cross-section of the extruder substantially at the first and second inlets 6a, 6b. Nozzle 34 receives the compressed dispersion C and enables its ejection, particularly nozzle 34 defines the exit 6c of dispenser 6. Extruder 15 has Internally at least one helix or screw (for example shown in Figure 3) adapted to rotate inside the extruder 15 around an axis parallel to the prevailing extension direction of the extruder itself: the rotation of the screw or helix enables the extruder 16 to move (push) carrier F (entering from the first inlet 6a) and additive A (entering from the second inlet 6b) along the advancement line 10 and simultaneously enables to mix them. In the attached figures, a single-screw extruder has been shown in a non-limiting way. However, the extruder 15 can comprise one or more pushing elements (screws or helixes) and define for example a twin-screw element. As it is visible in Figures 1 and 2, the dispenser 6 advantageously comprises a motor 24 operating the screw or helix adapted to enable its rotation. The rotation of the helix or screw 30 drives the dispersion C to the throttling 33 (compression of dispersion C) and then inside the nozzle 34 to be then ejected. As it is visible in the attached figures, apparatus 1 further comprises a pelletizer 7 arranged at the exit 6c of dispenser 6; pelletizer 7 is configured to continuously receive the fertilizing dispersion C exiting the nozzle 34 and (also continuously) form fertilizing pellets.

Pelletizer 7 comprises, in a non-limiting way, a roll adapted to rotate around an axis orthogonal to the advancement line 10. A plurality of ejection nozzles present on the outer surface of the roll enable to expel the fertilizing dispersion C which, exiting the dispenser 6, is introduced into the pelletizer drum. As previously mentioned, dispersion C exiting the dispenser 6 is in a liquid form. The drops of the liquid dispersion exiting the pelletizer nozzles are suitably deposited, according to desired quantities and size on a conveyor belt adapted to cool the drops in order to solidify them, in other words they will have a pellet form. The exit 6c of the dispenser, besides enabling the ejection of the dispersion C, possibly also enables the ejection of gasses and/or vapors formed by the extrusion of the material. Apparatus 1 can comprise an aspirator 20 substantially positioned at the exit 6c of the dispenser 6; aspirator 20 is configured to enable the withdrawal of gasses and/or vapors generated during the ejection of the fertilizing dispersion C from the dispenser 6. More particularly, the aspirator 20 comprises at least one collecting hood 21 positioned at the exit 6c of dispenser 6 and adapted to contain the gasses and/or vapors generated during the expulsion of the fertilizing dispersion from said dispenser 6. Hood 21 is in fluid communication with at least one discharge line 22 adapted to enable to withdraw and then eject the gasses collected by hood 21. The withdrawal and ejection of the gasses is ensured by the presence of at least one ejection device 23 (for example a fan) operative on the discharge line 22 and configured to direct the gasses and/or vapors from collecting hood 21 into the discharge line 22 for ejecting them. As it is visible in the attached figures, apparatus 1 comprises at least one conveyor belt 8 adapted to receive discrete liquid quantities of the liquid fertilizing dispersion which will form the pellets, cool the latter so that they can be converted from the liquid or semi-liquid form to the solid form and moving them along an exit line 16. Conveyor belt 8 ends with a distributor 26 adapted to guide the expulsion of the solidified pellets from the belt 8 itself. Apparatus 1 further comprises a cooling device (not shown in the attached figures) associated to the conveyor belt 8; the cooling device, such as a series of sprinkles spraying a refrigerating liquid (for example water) operating on the bottom surface of the conveyor belt, is configured to lower the temperature of the fertilizing dispersion C exiting the dispenser 6, particularly it enables to take the pellets moving on the conveyor belt to a temperature comprised between 20°C and 70°C, still more particularly comprised between 20°C and 50°C. A practical example of the cooling device can be represented by a water circuit adapted to cool down the belt 8 on which the pellets are moved: the belt cooling enables to cool down also the pellets contacting the latter with a consequent formation of pellets in the solid state. A further example of the cooling device can be represented by a blowing system positioned above the belt 8: the blowing system generates a cool air flow adapted to hit the pellets moving on belt 8. The quantity of carrier F and additive A sent by the respective sources 4, 5 enables to define the ratio between carrier F and additive A present in the fertilizing dispersion C and consequently enables to define the different properties of the pellets. More specifically, the fertilizing dispersion C has a percentage of carrier F greater than 70%, particularly greater than 80%, still more particularly greater than 85%. Referring to the concentrations of additive A, this is present in the dispersion with a percentage greater than 2%, particularly greater than 10%, still more particularly greater than 15%. In the attached figures, it is shown a preferred embodiment of apparatus 1, which is further provided with at least one bypass line 17 (shown for example in Figures 1 and 2) hydraulically connected to the first supply line 2 and configured to directly supply carrier F to pelletizer 7 by bypassing the dispenser 6. In order to bypass the dispenser 6, apparatus 1 is provided with at least one shut-off element 18 positioned in the first supply line 2 upstream the exit 2b of the latter; shut-off element 18 being in fluid communication with both the first supply line 2 and bypass line 17. The shut-off element 18 is configured to define a normal operative condition wherein this condition enables the carrier to pass through the overall supply line 2 to the dispenser 6 while it shuts off the passage of carrier F thorough the bypass line 17. The shut-off element 18 is further configured to define a bypass condition wherein it prevents carrier F to reach dispenser 6 while it enables the fluid to pass through the bypass line 17. Indeed, the shut-off element 18 can comprise a manual valve or a three-way solenoid valve. In a preferred embodiment of apparatus 1, it comprises a control unit 9 which is connected to at least one among the pump 13, batcher 14 and dispenser 6. Control unit 9 is operative at least on said pump 13 and is configured to drive the latter in order to control the flow rate of the liquid carrier F to be sent to the dispenser 6. The flow rate control of the solution enables to control the concentration of the latter in the pellets. For monitoring with a greater reliability the operation of pump 13 it is possible to connect control unit 9 also to the volumetric meter 19: in this way control unit 9 drives the pump 13 and checks by the meter the actual supply of carrier F. By this check, control unit 9 can continuously set the pump 13 based on measurements performed by the meter: in this way, control unit 9 enables an optimal management with reference to the carrier F quantity to be sent to the dispenser 6. Control unit 9, as represented in Figure 1, can be further connected also to the shut-off element 18 and configured to command the latter to position itself in the normal operative condition or bypass condition. As previously mentioned, control unit 9 is at least also connected to the gravimetric batcher 25 and is configured to drive the latter in order to manage the additive A quantity to be sent to dispenser 6: in this way the control unit manages the additive concentration present in pellets. Control unit 9 is further connected to dispenser 6 in order to enable to manage the flow rate of the fertilizing dispersion C to be sent to the pelletizer 7. Particularly, control unit 9 is connected to the motor 24 adapted to control the rotation speed of the helix or worm: by the management of motor 24, control unit enables to drive the rotation speed of the helix or screw with a consequent control of the advancement speed of dispersion C. As it is visible from the diagram of Figure 1, control unit 9 is further connected to the pelletizer 7 and belt 8. Indeed, based on the ejection speed of dispersion C, control unit 9 manages the speed of formation of pellets and the transport speed of belt 8. As it is visible in the diagram of Figure 1, control unit 9 can be further connected to the aspirator 20, distributor 26 in order to manage and control respectively the operation of aspirator and the pellets ejection. Figure 1 represents, in a non limiting way, a first embodiment of apparatus 1 which is formed by just one dispenser 6 supplied by just one first and second supply lines 2, 3. Figure 2 represents a practical variant consisting of a plurality of supply lines 2, 3 adapted to supply several dispensers 6. Indeed, the embodiment of Figure 2 schematically shows an apparatus 1 comprising several pellet production lines 35. It is possible to configure the production lines 35 so that each of them supplies pellets having different concentrations of carrier F and/or additive A. In the embodiment of Figure 2, distributor 26 of each production line 35 supplies a switching belt 27 configured to collect pellets exiting each production line 35 and supplies the latter to different collecting reservoirs 28.

### Process for producing a fertilizer in pellet form

It is a further object of the present invention a process for producing a fertilizer in pellet form. The process comprises a first step of collecting a certain quantity of carrier F in the first reservoir 11. The carrier F inside the first reservoir 11 is heated by a heating device 15 and is taken to a temperature comprised between 70°C and 200°C, particularly comprised between 80°C and 180°C, still more particularly comprised between 90°C and 150°C. Heating the carrier F heating enables to make and keep it in the liquid state so that said solution F can be managed in the other process steps. The process provides to continuously supply, through the first supply line 2, the liquid solution F by the operation of pump 13 which enables to withdraw said carrier F from first reservoir 11 (first source 4) and (continuously) supply it to the dispenser 6 through the first inlet 6a. More specifically, in a practical example, the pump is configured to continuously supply a carrier F flow rate greater than 7,000 kg/hr, particularly comprised between 9,000 kg/hr and 10,000 kg/hr. Simultaneously with the supply of solution F to dispenser 6, the process provides to continuously supply the additive A to said dispenser 6 through the second supply line 3. The supply step of the additive A provides to operate the valves 14 and gravimetric batcher 25 which enables to withdraw said additive A from second reservoir 12 (second source 5) and (continuously) supply it to the dispenser 6 through the second inlet 6b. More particularly, batcher 25 enables to continuously send to the dispenser a quantity of additive A greater than 1,800 kg/hr, particularly comprised between 2,000 kg/hr and 2,400 kg/hr. As previously described, second inlet 6b of additive A is upstream the first inlet 6a of the carrier; the process therefore provides to introduce the additive upstream the carrier. Such introduction sequence enables to form a solid plug of granular or powdery additive upstream the first inlet 6a. The additive A solid plug is pushed by the mixing element in the direction of the exit 6c of the dispenser. The carrier introduction through the first inlet positioned downstream the second inlet enables the carrier to hit the solid plug in order to form the fertilizing dispersion C. In this way, the additive (a solid plug of granular or powdery material) enables the carrier to advance to the exit 6c. Carrier F and additive A in the dispenser 6 are continuously moved to the exit 6c of the latter along the movement direction 10: the movement is generated by the operation of motor 24 which puts in rotation the helix or screw 30. Simultaneously with the continuous movement of carrier F and additive A, dispenser 6 mixes the latter to obtain the fertilizing dispersion C. The helix or screw 30 pushes the fertilizing dispersion C through the throttling 33 from where the dispersion is compelled to pass through the nozzle 34. Indeed, dispersion C is continuously moved inside the dispenser 6 and ejected, still continuously, through the exit 6c. Specifically, the process enables to continuously supply a quantity of the fertilizing dispersion C greater than 8,000 kg/hr, particularly comprised between 11,000 kg/hr and 15,000 kg/hr. The concentrations of the carrier F and additive A in the dispersion and consequently in the pellets vary as a function of the quantities of the same. Particularly, the dispersion C, exiting the dispenser6, has a percentage of carrier F greater than 70%, particularly greater than 80%, still more particularly greater than 85%. The concentration of additive A present in the fertilizing dispersion C exiting the dispenser 6, is greater than 2%, particularly greater than 10%, still more particularly greater than 15%. During the ejection of dispersion C, there is a possible formation of gasses or vapors at the exit 6c of dispenser 6. The process can comprise, in a non-limiting way, a step of sucking said gasses or vapors from the area where the dispersion C exits. Particularly, the process provides a step of turning on the ejection device 23 (for example a fan) which is in communication with the discharge line 22 which in turn is connected to the collecting hood 21. The gasses and/or vapors generated when the dispersion C exits the dispenser 6, are contained and collected by the hood 21. The operation of the device 23 enables to drive said gasses inside the discharge line 22 and then they are ejected from the same device 23. Generally, the sucking step is performed in order to take the gasses and/or vapors generated by the dispersion C ejection step, far from the production area. The fertilizing dispersion C is generally formed by solutions or chemical compounds which can generate irritant gasses and/or vapors or anyway be removed from the work area: the removal of the gasses enables to keep safe the production site and in optimal working conditions. The dispersion C exiting the dispenser 6 is continuously sent to the pelletizer 7 which is configured to enable the formation of pellets formed by said fertilizing dispersion C. Indeed, the pelletizer 7 collects the fertilizing dispersion C continuously arriving from the dispenser and manufactures pellets on the conveyor belt. The step of pelletizing dispersion C is per se known and can be performed by different types of pelletizing units or pelletizers 7 and therefore will be not further explained. Pelletizer 7 continuously manufactures a plurality of dispersion C pellets which are deposited on belt 8 moving the pellets along the exit line 16 and to the distributor 26. The pellets moving on belt 8 are cooled down and taken to the solid state. The process, as configured, enables to continuously produce a number of fertilizing pellets greater than 40,000,000 pellets/hr, particularly greater than 42,000,000 pellets/hr, still more particularly greater than 43,000,000 pellets/hr. The described process refers, in a non-limiting way, to just one production line 35, in other words to a process using just one dispenser 6 provided with only two supply lines 2 and 3. However, it is not excluded the possibility of providing a plurality of first and second supply lines 2 and 3 adapted to supply several dispensers 6 (condition shown in Figure 2). Each of said lines 2, 3 can be supplied with different flow rates of the carrier F or additive A so that each dispenser 6 can supply different pellets (different concentrations of the solution F and additive A). Both in case there is only one dispenser 6 and in case there are a plurality of dispensers 6, the process can provide the presence of a control unit 9 which enables, in a non-limiting way, to monitor and manage the overall process.

### Fertilizer in pellet form

The method and the plant, as described, can be obviously used for producing any kind of fertilizer in pellet form. However, here it is described an example of a fertilizing composition which is deemed particularly interesting and which can be produced in pellet form. It is observed that the same pellets (as explained in the following) can be advantageously produced by the described process, but also by plants having a reservoir for batch mixing a carrier F and additive A. Generally, the pellet fertilizer comprises a plurality of discrete elements or pellets having a shape and size which are almost similar and have the same composition. The weight of at least 90% of the pellets of fertilizer is less than 100 gr, particularly less than 80 gr, still more particularly less than 50 gr. Each pellet is substantially formed by a carrier F comprising sulphur, present in the dispersion in percentage by weight not less than 70% (the percentage by weight of the carrier (F) is generally greater than 80% particularly greater than 85%). The composition then provides the presence of at least one additive A homogeneously dispersed in the carrier F; additive A comprises at least one substance adapted to perform a disgregating mechanical function of the pellet, in the presence of water or moisture. Indeed, since the carrier which at a room temperature (for example 25°C) is in a solid state, is substantially insoluble in water, it is necessary to add a component which causes its disgregation, particularly by a mechanical-type action. To this end, the more interesting carrier is sulphur. To this end, the specific weight of carrier F, when consists of sulphur, is greater than 1.9 kg/dm³. To this end, the substance adapted to perform the disgregating mechanical function of the pellet in the presence of rain or irrigation comprises vegetal fibers. Illustratively, it is possible to use wood, wood shavings or anyway wood-based waste materials, vegetal masses, starches, stubbles and/or combinations thereof. The substance adapted to perform a disgregating mechanical function of the pellet is dispersed in the pellet in a particulate form, whose particles have a granulometry greater than 50 microns and less than 150 microns, particularly comprised between 80 and 120 microns. Indeed, in the presence of moisture, this substance absorbs water and increases the volume. Since this substances are intimately dispersed in the pellet, they cause the disgregation of the fertilizing pellet so that the components can be used for crop farming. The specific weight of a substance adapted to perform a disgregating mechanical function of the pellet is less than 1.7 kg/dm³, particularly less than 1.5 kg/dm³. It is observed that the substance adapted to perform a disgregating mechanical function of the pellet is present in percentage greater than 2% by weight, but less than 10% by weight, and particularly less than 7% by weight. Indeed, the use of vegetal fibers having a low weight enables to reduce the percentage of such components against a possible increment of other additives, particularly micronutrients, as explained in the following. As said, the additive can comprise more or less other components such as micronutrients or sanitizing elements. In general terms, the percentage by weight of the additive A is generally greater than 10% and particularly greater than 15% and is in percentage by weight less than 20% and particularly greater than 16% by weight. The possible micronutrient substance/substances comprises/comprise urea, sodium sulphates, potassium, calcium, ammonium, sodium phosphates, sodium carbonates, wood ash or combinations thereof and makes/make up in percentage by weight, less than 15%, more particularly less than 12% of the overall weight of the pellet. Generally, the micronutrient substance is present in percentage by weight greater than 5%, more particularly greater than 8% by weight. If desired, the additive (A) can comprise at least one sanitizing substance, such as coal.

## Claims

1. A fertilizer in pellet form, each pellet comprising:
- a carrier (F), said carrier comprising Sulphur and being present in the dispersion in percentage by weight not less than 70%;
- at least one additive (A) homogeneously dispersed in the carrier (F), the additive (A) comprising at least one substance having a disgregating mechanical function of the pellet in the presence of water or moisture, said substance having a disgregating mechanical function of the pellet being present in percentage greater than 2% by weight, **characterized in that** said substance having a disgregating mechanical function of the pellet comprises vegetal fibers, such as wood, wood-based materials, vegetal masses, starch, stubbles and/or combinations thereof and **in that** the substance having a disgregating mechanical function of the pellet is dispersed in the pellet in a particulate form wherein the particles have a granulometry greater than 50 microns and less than 150 microns.

2. A process for producing a fertilizer in pellet form, comprising the following steps:
- providing at least one carrier (F), said carrier comprising Sulphur;
- providing at least one additive (A) in a granular or powdery form;
- homogeneously mixing the carrier (F) and additive (A) for obtaining a fertilizing dispersion (C) in a liquid or semi-liquid form, said liquid carrier being present inside the dispersion with a percentage by weight not less than 70%;
- sending said fertilizing dispersion (C) in a liquid or semi-liquid form to the pelletizer (7) configured to enable to form pellets of fertilizer (C);
- forming the pellets by the pelletizer (7) by supplying drops of the fertilizing dispersion on at least one conveyor belt (8);
- cooling said pellets passing on said conveyor belt (8) in order to enable a solidification, at least partial, of the latter, the additive (A) comprising at least one substance having a disgregating mechanical function of the pellet in the presence of water or moisture, said substance having a disgregating mechanical function of the pellet being present in percentage greater than 2% by weight, **characterized in that** said substance having a disgregating mechanical function of the pellet comprises vegetal fibers such as wood, wood-based materials, vegetal masses, starches, stubbles and/or combinations thereof, and **in that** the substance having a disgregating mechanical function of the pellet is dispersed in the pellet in a particulate form wherein the particles have a granulometry greater than 50 microns and less than 150 microns.

3. The fertilizer of claim 1 or the process of claim 2, wherein the percentage by weight of the carrier (F) is greater than 80%, particularly greater than 85%.

4. The fertilizer of any one of the claims 1, 3 or the process of any one of the claims 2-3, wherein the percentage by weight of the additive (A) is greater than 10%, particularly greater than 15%, optionally wherein the additive (A) has a percentage by weight less than 20% and particularly less than 16% by weight.

5. The fertilizer of any one of the claims 1, 3-4 or the process of any one of the claims 2-4, wherein the carrier (F) is substantially insoluble in water.

6. The fertilizer of any one of the claims 1, 3-5 or the process of any one of the claims 2-5, wherein the substance having a disgregating mechanical function of the pellet absorbs water and/or moisture by increasing the volume for at least partially mechanically disgregating the pellet.

7. The fertilizer of any one of the claims 1, 3-6 or the process of any one of the claims 2-6, wherein the substance of additive (A), adapted to perform a disgregating mechanical function of the pellet, is equal to or greater than 5% wt.

8. The fertilizer of any one of the claims 1, 3-7 or the process of any one of the claims 2-7, wherein the substance of additive (A), adapted to perform a disgregating mechanical function of the pellet, is comprised between 2 and 15% wt, optionally wherein the substance having a disgregating mechanical function of the pellet is present in percentage less than 10% by weight and particularly less than 7% by weight.

9. The fertilizer of any one of the claims 1, 3-8 or the process of any one of the claims 2-8, wherein the additive (A) further comprises at least one micronutrient substance.

10. The fertilizer or the process of the preceding claim, wherein the micronutrient substance is comprised in percentage by weight less than 15%, more particularly less than 12% by weight, optionally wherein the micronutrient substance is comprised in percentage by weight greater than 5%, more particularly greater than 8% by weight.

11. The fertilizer of any one of the claims 1, 3-10 or the process of any one of the claims 2-10, wherein the substance having a disgregating mechanical function of the pellet is present in percentage greater than 10% by weight.

12. The fertilizer of any one of the claims 1, 3-11 or the process of any one of the claims 2-11, wherein the particles have a granulometry comprised between 80 and 120 microns.

13. The fertilizer of any one of the claims 1, 3-12 or the process of any one of the claims 2-12, the specific weight of carrier (F) is greater than 1.3 kg/dm³, particularly greater than 1.9 kg/dm³.

14. The fertilizer of any one of the claims 1, 3-13 or the process of any one of the claims 2-13, wherein said carrier consists of Sulphur and the specific weight of carrier (F) is greater than 1.9 kg/dm³.

## Patentansprüche

1. Düngemittel in Pelletform, wobei jedes Pellet umfasst:
- einen Träger (F), wobei der Träger Schwefel umfasst und in der Dispersion in einem Gewichtsanteil von nicht weniger als 70 % anwesend ist;
- mindestens ein Additiv (A), welches homogen in dem Träger (F) dispergiert ist, wobei das Additiv (A) mindestens eine Substanz umfasst, welche eine disgregierende mechanische Funktion des Pellets in der Anwesenheit von Wasser oder Feuchtigkeit aufweist, wobei die Substanz, welche eine disgregierende mechanische Funktion des Pellets aufweist, in einem Anteil von mehr als 2 Gew.-% anwesend ist, **dadurch gekennzeichnet, dass** die Substanz, welche eine disgregierende mechanische Funktion des Pellets aufweist, pflanzliche Fasern umfasst, so wie Holz, holzbasierende Materialien, pflanzliche Massen, Stärke, Stoppeln und/oder Kombinationen davon, und dass die Substanz, welche eine disgregierende mechanische Funktion des Pellets aufweist, in dem Pellet in einer partikulären Form dispergiert ist, wobei die Partikel eine Granulometrie von mehr als 50 Mikrometer und weniger als 150 Mikrometer aufweisen.

2. Verfahren zum Herstellen eines Düngemittels in Pelletform, umfassend die folgenden Schritte:
- Bereitstellen mindestens eines Trägers (F), wobei der Träger Schwefel umfasst;
- Bereitstellen mindestens eines Additivs (A) in einer granularen oder pulverförmigen Form;
- homogenes Mischen des Trägers (F) und des Additivs (A), um eine Düngemitteldispersion (C) in einer flüssigen oder semi-flüssigen Form zu erhalten, wobei der flüssige Träger innerhalb der Dispersion in einem Anteil von nicht weniger als 70 % anwesend ist;
- Senden der Düngemitteldispersion (C) in flüssiger oder semi-flüssiger Form an den Pelletierer (7), welcher dazu eingerichtet ist, es zu ermöglichen Pellets des Düngemittels (C) zu formen;
- Formen der Pellets durch den Pelletierer (7), durch Bereitstellen von Tropfen der Düngemitteldispersion auf mindestens einem Förderband (8);
- Abkühlen der Pellets, welche auf dem Förderband (8) passieren, um eine Verfestigung zu ermöglichen, mindestens teilweise, der Letzteren, wobei das Additiv (A) mindestens eine Substanz umfasst, welche eine disgregierende mechanische Funktion des Pellets in der Anwesenheit von Wasser oder Feuchtigkeit aufweist, wobei die Substanz, welche eine disgregierende mechanische Funktion des Pellets aufweist, in einem Anteil von mehr als 2 Gew.-% anwesend ist, **dadurch gekennzeichnet, dass** die Substanz, welche eine disgregierende mechanische Funktion des Pellets aufweist, pflanzliche Fasern umfasst, so wie Holz, holzbasierende Materialien, pflanzliche Massen, Stärken, Stoppeln und/oder Kombinationen davon, und dass die Substanz, welche eine disgregierenden mechanischen Funktion des Pellets aufweist, in dem Pellet in einer partikulären Form dispergiert ist, wobei die Partikel eine Granulometrie von mehr als 50 Mikrometer und weniger als 150 Mikrometer aufweisen.

3. Düngemittel nach Anspruch 1 oder Verfahren nach Anspruch 2, wobei der Gewichtsanteil des Trägers (F) größer als 80 %, insbesondere größer als 85 % beträgt.

4. Düngemittel nach einem der Ansprüche 1, 3 oder Verfahren nach einem der Ansprüche 2-3, wobei der Gewichtsanteil des Additivs (A) mehr als 10 %, insbesondere größer als 15 % beträgt, wobei optional das Additiv (A) einen Gewichtsanteil von weniger als 20 % und insbesondere weniger als 16 % aufweist.

5. Düngemittel nach einem der Ansprüche 1, 3-4 oder Verfahren nach einem der Ansprüche 2-4, wobei der Träger (F) im Wesentlichen unlöslich in Wasser ist.

6. Düngemittel nach einem der Ansprüche 1, 3-5 oder Verfahren nach einem der Ansprüche 2-5, wobei die Substanz, welche eine disgregierende mechanische Funktion des Pellets aufweist, Wasser und/oder Feuchtigkeit absorbiert, durch Vergrößern des Volumens, um das Pellet zumindest teilweise mechanisch zu disgregieren.

7. Düngemittel nach einem der Ansprüche 1, 3-6 oder Verfahren nach einem der Ansprüche 2-6, wobei die Substanz des Additivs (A), welche dazu angepasst ist, eine disgregierende mechanische Funktion des Pellets auszuführen, gleich oder mehr als 5 Gew.-% beträgt.

8. Düngemittel nach einem der Ansprüche 1, 3-7 oder Verfahren nach einem der Ansprüche 2-7, wobei die Substanz des Additivs (A), welche dazu angepasst ist, eine disgregierende mechanische Funktion des Pellets auszuführen, zwischen 2 und 15 Gew.-% umfasst, wobei optional die Substanz, welche eine disgregierende mechanische Funktion des Pellets aufweist, in einem Anteil von weniger als 10 Gew.-% und insbesondere weniger als 7 Gew.-% anwesend ist.

9. Düngemittel nach einem der Ansprüche 1, 3-8 oder Verfahren nach einem der Ansprüche 2-8, wobei das Additiv (A) ferner mindestens eine Mikronährstoffsubstanz umfasst.

10. Düngemittel oder Verfahren nach dem vorhergehenden Anspruch, wobei die Mikronährstoffsubstanz in einem Gewichtsanteil von weniger als 15 %, weiter insbesondere weniger als 12 % umfasst ist, wobei optional die Mikronährstoffsubstanz in einem Gewichtsanteil von mehr als 5 %, insbesondere mehr als 8 % umfasst ist.

11. Düngemittel nach einem der Ansprüche 1, 3-10 oder Verfahren nach einem der Ansprüche 2-10, wobei die Substanz, welche eine disgregierende mechanische Funktion des Pellets aufweist, in einem Anteil von mehr als 10 Gew.-% anwesend ist.

12. Düngemittel nach einem der Ansprüche 1, 3-11 oder Verfahren nach einem der Ansprüche 2-11, wobei die Partikel eine Granulometrie zwischen 80 und 120 Mikrometer umfassen.

13. Düngemittel nach einem der Ansprüche 1, 3-12 oder Verfahren nach einem der Ansprüche 2-12, das spezifische Gewicht des Trägers (F) mehr als 1,3 kg/dm³, insbesondere mehr als 1,9 kg/dm³ beträgt.

14. Düngemittel nach einem der Ansprüche 1, 3-13 oder Verfahren nach einem der Ansprüche 2-13, wobei der Träger aus Schwefel besteht und das spezifische Gewicht des Trägers (F) mehr als 1,9 kg/dm³ beträgt.

## Revendications

1. Engrais sous forme de granulés, chaque granulé comprenant :
- un support (F), ledit support comprenant du soufre et étant présent dans la dispersion en pourcentage en poids non inférieur à 70 % ;
- au moins un additif (A) dispersé de manière homogène dans le support (F), l'additif (A) comprenant au moins une substance ayant une fonction mécanique de désagrégation du granulé en présence d'eau ou d'humidité, ladite substance ayant une fonction mécanique de désagrégation du granulé étant présente en pourcentage supérieur à 2 % en poids, **caractérisé en ce que** ladite substance ayant une fonction mécanique de désagrégation du granulé comprend des fibres végétales, telles que du bois, des matériaux à base de bois, des masses végétales, de l'amidon, des chaumes et/ou des combinaisons de ceux-ci et **en ce que** la substance ayant une fonction mécanique de désagrégation du granulé est dispersée dans le granulé sous une forme de particules dans laquelle les particules présentent une granulométrie supérieure à 50 microns et inférieure à 150 microns.

2. Procédé de production d'un engrais sous forme de granulés, comprenant les étapes suivantes :
- fournir au moins un support (F), ledit support comprenant du soufre ;
- fournir au moins un additif (A) sous une forme de granulé ou de poudre ;
- mélanger de manière homogène le support (F) et l'additif (A) pour obtenir une dispersion fertilisante (C) sous une forme liquide ou semi-liquide, ledit support liquide étant présent à l'intérieur de la dispersion sous un pourcentage en poids non inférieur à 70 % ;
- envoyer ladite dispersion fertilisante (C) sous une forme liquide ou semi-liquide au dispositif de fabrication de granulés (7) configuré pour permettre de former des granulés d'engrais (C) ;
- former les granulés par le dispositif de fabrication de granulés (7) en alimentant des gouttelettes de la dispersion fertilisante sur au moins une courroie transporteuse (8) ;
- refroidir lesdits granulés passant sur ladite courroie transporteuse (8) afin de permettre une solidification, au moins partielle, de ceux-ci, l'additif (A) comprenant au moins une substance ayant une fonction mécanique de désagrégation du granulé en présence d'eau ou d'humidité, ladite substance ayant une fonction mécanique de désagrégation du granulé étant présente en un pourcentage supérieur à 2 % en poids, **caractérisé en ce que** ladite substance ayant une fonction mécanique de désagrégation du granulé comprend des fibres végétales telles que du bois, des matériaux à base de bois, des masses végétales, des amidons, des chaumes et/ou leurs combinaisons, et **en ce que** la substance ayant une fonction mécanique de désagrégation du granulé est dispersée dans le granulé sous une forme de particules dans laquelle les particules présentent une granulométrie supérieure à 50 microns et inférieure à 150 microns.

3. Engrais selon la revendication 1 ou procédé selon la revendication 2, dans lequel le pourcentage en poids du support (F) est supérieur à 80 %, particulièrement supérieur à 85 %.

4. Engrais selon l'une quelconque des revendications 1, 3 ou procédé selon l'une quelconque des revendications 2 à 3, dans lequel le pourcentage en poids de l'additif (A) est supérieur à 10 %, particulièrement supérieur à 15 %, éventuellement dans lequel l'additif (A) présente un pourcentage en poids inférieur à 20 % et particulièrement inférieur à 16 % en poids.

5. Engrais selon l'une quelconque des revendications 1, 3 à 4 ou procédé selon l'une quelconque des revendications 2 à 4, dans lequel le support (F) est sensiblement insoluble dans l'eau.

6. Engrais selon l'une quelconque des revendications 1, 3 à 5 ou procédé selon l'une quelconque des revendications 2 à 5, dans lequel la substance ayant une fonction mécanique de désagrégation du granulé absorbe l'eau et/ou l'humidité en augmentant le volume pour désagréger mécaniquement au moins partiellement le granulé.

7. Engrais selon l'une quelconque des revendications 1, 3 à 6 ou procédé selon l'une quelconque des revendications 2 à 6, dans lequel la substance d'additif (A), adaptée pour exécuter une fonction mécanique de désagrégation du granulé, est supérieure ou égale à 5 % en pds.

8. Engrais selon l'une quelconque des revendications 1, 3 à 7 ou procédé selon l'une quelconque des revendications 2 à 7, dans lequel la substance d'additif (A), adaptée pour exécuter une fonction mécanique de désagrégation du granulé, est comprise entre 2 et 15 % en pds, éventuellement dans lequel la substance ayant une fonction mécanique de désagrégation du granulé est présente en pourcentage inférieur à 10 % en poids et particulièrement inférieur à 7 % en poids.

9. Engrais selon l'une quelconque des revendications 1, 3 à 8 ou procédé selon l'une quelconque des revendications 2 à 8, dans lequel l'additif (A) comprend en outre au moins une substance type micronutriment.

10. Engrais ou procédé selon la revendication précédente, dans lequel la substance type micronutriment est comprise en pourcentage en poids inférieur à 15 %, plus particulièrement inférieur à 12 % en poids, éventuellement dans lequel la substance type micronutriment est comprise en pourcentage en poids supérieur à 5 %, plus particulièrement supérieur à 8 % en poids.

11. Engrais selon l'une quelconque des revendications 1, 3 à 10 ou procédé selon l'une quelconque des revendications 2 à 10, dans lequel la substance ayant une fonction mécanique de désagrégation du granulé est présente en pourcentage supérieur à 10 % en poids.

12. Engrais selon l'une quelconque des revendications 1, 3 à 11 ou procédé selon l'une quelconque des revendications 2 à 11, dans lequel les particules présentent une granulométrie comprise entre 80 et 120 microns.

13. Engrais selon l'une quelconque des revendications 1, 3 à 12 ou procédé selon l'une quelconque des revendications 2 à 12, le poids spécifique du support (F) est supérieur à 1,3 kg/dm³, particulièrement supérieur à 1,9 kg/dm³.

14. Engrais selon l'une quelconque des revendications 1, 3 à 13 ou procédé selon l'une quelconque des revendications 2 à 13, dans lequel ledit support est constitué de soufre et le poids spécifique du support (F) est supérieur à 1,9 kg/dm³.
